Europäisches Patentamt

European Patent Office

Office européen des brevets

(11) Numéro de publication: **0 001 938**
**B1**

(12) **FASCICULE DE BREVET EUROPEEN**

(21) Numéro de dépôt: **78400135.6**

(22) Date de dépôt: **13.10.78**

(51) Int. Cl.³: **B 23 D 37/20**

(54) **Brocheuse à broches multiples**

(30) Priorité: **04.11.77 FR 7733189**

(43) Date de publication de la demande:
**16.05.79 Bulletin 79/10**

(45) Mention de la délivrance du brevet:
**28.05.80 Bulletin 80/11**

(84) Etats contractants désignés:
**BE CH DE GB NL SE**

(56) Documents cités:
**US - A - 2 212 737**
**US - A - 3 550 504**

(73) Titulaire: **REGIE NATIONALE DES USINES RENAULT**
**Boite postale 103 8—10 avenue Emile Zola**
**F—92109 Boulogne-Billancourt (FR)**

(72) Inventeur: **Roturier, Christian**
**39, rue Mansart**
**F—78330—Fontenay Le Fleury (FR)**

(74) Mandataire: **Kessler, Michel**
**RNUR—S.0804 B.P. 103**
**F—92109 Boulogne-Billancourt (FR)**

Courier Press, Leamington Spa, England.

## Brocheuse à broches multiples

L'invention due à la collaboration de Monsieur Christian ROTURIER, se rapporte à une brocheuse à broches multiples destinée notamment au brochage d'un réseau régulier de trous ménagés dans une plaque, comme c'est le cas des plaques entretoises pour échangeurs de chaleur, ou plus généralement au brochage multiple simultané de pièces en grandes séries.

On connaît déjà de telles brocheuses comprenant des moyens de traction et des moyens d'accompagnement des broches qui coopèrent respectivement avec les extrémités opposées de celles-ci pour assurer leur passage au travers des trous des pièces à brocher, d'un côté à l'autre de celles-ci.

Avec les brocheuses connues ainsi constituées, il est nécessaire après chaque passe de brochage, dans le cas d'une plaque à trous par exemple, de l'effacer pour ramener les broches en position de départ, puis de repositionner la plaque pour la passe suivante. Cette manutention nuit évidemment à la capacité de production de la machine.

La présente invention a pour objet un agencement de brocheuse permettant d'en accroître la capacité de production en éliminant notamment l'inconvénient précité.

A cet effet, la brocheuse à broches multiples selon l'invention, du genre prédéfini, est caractérisée en ce que les moyens de traction et les moyens d'accompagnement sont prévus pour deux groupes semblables de broches destinés à travailler simultanément en sens inverse, et qu'il leur est associé de chaque côté du plan de positionnement des pièces un dispositif de manutention destiné à transférer en le retournant chaque groupe de broches des moyens de traction aux moyens d'accompagnement voisins en fin de passe, de sorte que les broches de chaque groupe opèrent par passes travaillantes successives de sens inverse, dans l'intervalle desquelles il suffit de repositionner les pièces selon les brochages désirés.

Le dispositif de manutention peut bien entendu être tel qu'il conserve l'orientation angulaire des broches autour de leur axe si nécessaire, par exemple être à pinces de forme appropriée.

L'invention peut bien entendu aussi s'appliquer à n'importe quel genre de brochage d'intérieur par un nombre quelconque de broches en circulation, avec ou sans orientation des usinages, même asymétriques.

Une forme de réalisation d'une telle brocheuse est d'ailleurs ci-après décrite, à titre d'exemple, dans le cadre d'une brocheuse horizontale et en référence au dessin annexé, dans lequel:

—la figure 1 est une vue en plan de la brocheuse,

—la figure 2 est une vue en élévation avec coupe partielle de la machine de la figure 1 et variante de position du dispositif de manutention,

—la figure 3 est une vue en plan à plus grande échelle d'un dispositif de manutention des broches entre les moyens adjacents de traction et d'accompagnement des deux groupes de broches,

—la figure 4 est une vue en élévation du dispositif de manutention de la figure 3 suivant la flèche IV, dans une autre position de translation de la pince de manutention,

—la figure 5 est une vue en coupe verticale du dispositif de manutention des figures 3 et 4, prise transversalement aux broches,

—les figures 6 à 13 sont des vues en plan illustratives des différentes phases de fonctionnement du dispositif de manutention des broches en fin de passe et avant la suivante,

—la figure 14 est une vue de détail des têtes de verrouillage de traction,

—la figure 15 est une vue de détail d'un mécanisme de commande des têtes de verrouillage de traction.

La brocheuse représentée comprend un bâti inférieur constituant un bac 1 de récupération de l'huile d'arrosage, qui est pourvu à sa partie supérieure de chemins de roulement 2 pour un portique 3 de suspension de la pièce à usiner, telle qu'une plaque 4 présentant un réseau régulier de trous multiples à brocher, dont on n'a représenté qu'une partie d'entre eux en 5.

Le portique 3 comporte deux palans électriques 6 adaptés pour être liés à la plaque 4 qu'ils chevauchent, par engagement d'un axe de liaison 7 traversant un trou de celle-ci et des oeillets inférieurs correspondants de chaque brin de suspension.

Le portique présente aussi, juste au-dessus du niveau du poste de brochage B que l'on verra plus loin en détail, deux règles longitudinales 8 entre lesquelles est engagée la plaque 4 et qui présentent chacune au moins deux vés de support de goupilles 9 servant à assurer le blocage à hauteur choisie de la plaque 4 sur le portique, par engagement de ces goupilles dans deux trous de la rangée de trous adéquate existant sur la plaque 4, les goupilles venant reposer sur lesdits vés.

Le portique 3 peut être déplacé sur le chemin de roulement 2 de part et d'autre du poste de brochage B, par l'intermédiaire d'un moteur électrique schématisé en 10 et entraînant un pignon 10a qui coopère avec une crémaillère 10b fixée à la base du portique, lequel roule sur les chemins 2 par des galets 11.

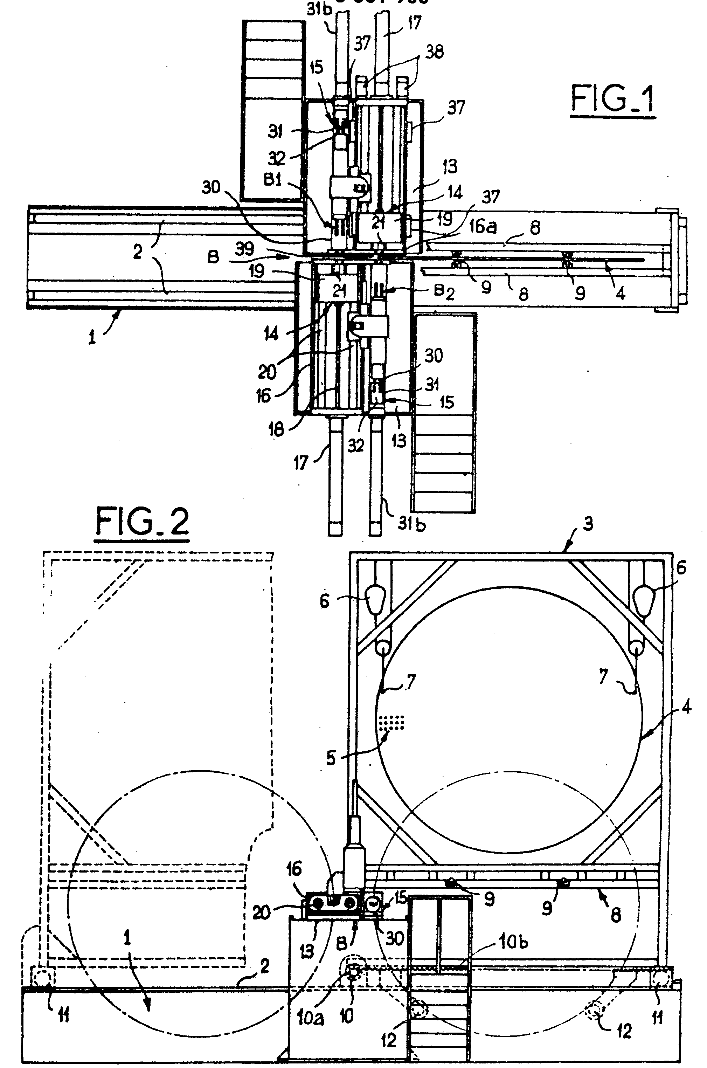

Le poste de brochage B a ses broches disposées à une hauteur telle que l'on puisse brocher les trous d'au moins la moitié inférieure de la plaque 4 dans ses diverses positions de suspension en hauteur sur le portique, deux galets 12 étant prévus sous le portique, dont l'un freiné et l'autre motorisé, afin de faire pivoter la plaque de 180° après le brochage d'une moitié de sa surface, pour changer les points d'attache des brins de suspension 7 des palans en vue de procéder au brochage de l'autre moitié de sa surface. Il va de soi que le chemin de roulement du portique est tel que la plus grande rangée horizontale de trous de la plaque 4 peut être déplacée horizontalement d'une amplitude suffisante pour en brocher les trous d'extrémité, les positions extrêmes limites de la plaque dans le sens vertical et horizontal étant indiquées en trait mixte à la figure 2.

Le poste de brochage B comprend deux tables 13 disposées de part et d'autre du plan d'evolution de la plaque 4 et supportant chacune, côte à côte, un dispositif de traction 14 d'un groupe de broches B1 ou B2 et un dispositif d'accompagnement 15 de l'autre groupe de broches B2 ou B1, chaque groupe comprenant ici deux broches, mais il va de soi que ce nombre est indifférent quant à l'invention, dès lors que les groupes sont identiques.

Chaque dispositif de traction 14 comprend un châssis 16 porteur d'un vérin hydraulique 17 dont la tige de piston 18 est solidaire d'un bloc de traction 19 monté coulissant sur deux tiges latérales de guidage 20 solidaires du châssis.

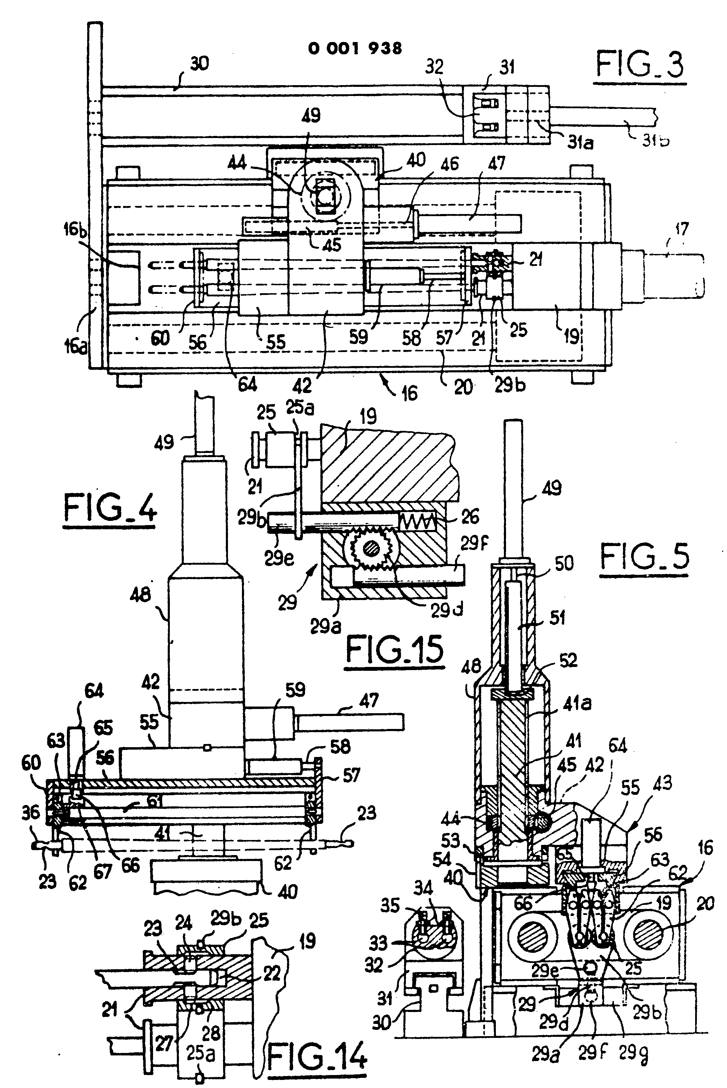

Le bloc de traction présente sur sa face avant deux têtes de verrouillage 21 des extrémités des broches destinées à y être engagées de façon libérable. De telles têtes de verrouillage sont connues en soi et définies notamment par la norme française C.N.O.M.O. 26—65—50 et 51 ou allemande DIN 1418. Elles comportent notamment, comme on peut le voir aux figures 3 et 14, un logement de réception 22 de l'extrémité de broche qui est pourvue d'une gorge de retenue 23 avec laquelle coopèrent des doigts radiaux de verrouillage 24 montés libres dans une fente correspondante du logement 22 et entourés d'un poussoir 25 mobile axialement par rapport à ce dernier. Le poussoir présente un logement 27 à rampe d'actionnement 28 des doigts 24 correspondants, de sorte que, selon sa position axiale par rapport au logement, il permet l'engagement, le verrouillage et ensuite le déverrouillage de l'extrémité de broche.

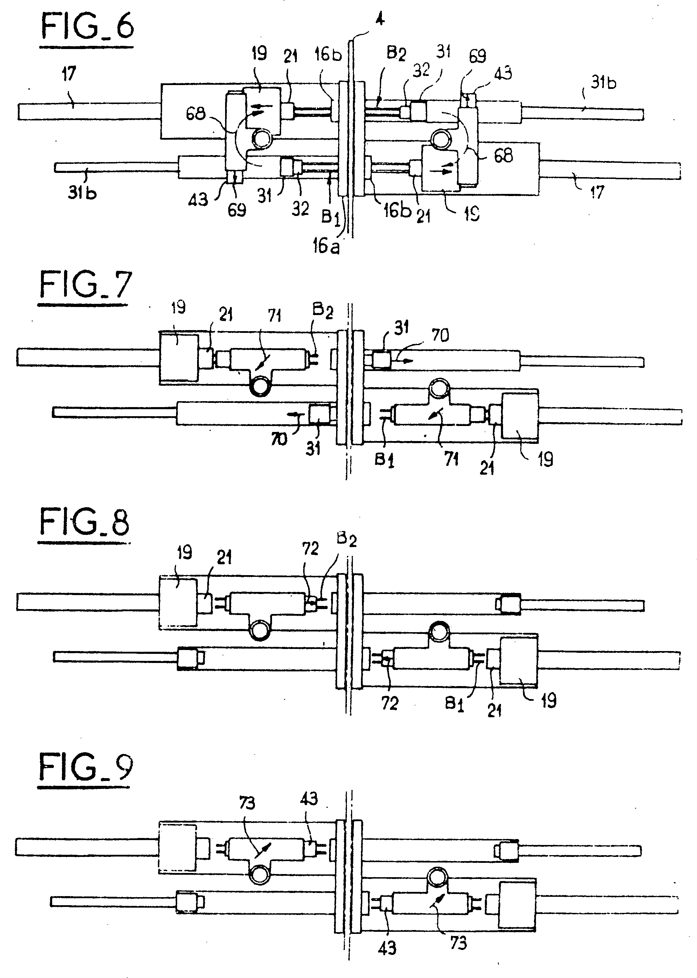

Dans le cas présent, la position axiale des deux poussoirs 25 est commandée en fin de course avant et arrière du bloc de traction 19 par l'intermédiaire d'un dispositif 29 monté dans un boîtier 29a fixé sous le bloc de traction (voir figures 5 et 15). Ce dispositif 29 comprend une paire de fourchettes 29b respectivement engagées dans une gorge externe 25a de chacun des poussoirs et liées à une tige de butée 29e montée coulissante dans le boîtier 29a où elle forme en partie crémaillère et engrène avec un pignon 29d monté tournant dans ce dernier. Une autre tige de butée 29f, taillée en crémaillère, engrène avec le pignon 29d et est montée coulissante dans le boîter 29a. La tige 29e est normalement proéminente vers l'avant, sous l'action d'un ressort de compression 26, et elle coopère avec la plaque avant du châssis 16 en fin de course avant du bloc 19, pour provoquer le recul des poussoirs 25 en comprimant le ressort 26 (autorisation d'engagement des broches dans les têtes de verrouillage correspondantes 21), tandis que la tige 29f est normalement proéminente vers l'arrière et coopère, en fin de course arrière du bloc 19, avec une plaque de butée 29g supportée par le châssis 16 pour y provoquer également un recul des poussoirs 25 comprimant le ressort 26 (déverrouillage des extrémités de broche maintenues dans les têtes de verrouillage correspondantes 21).

Chaque dispositif d'accompagnement 15 comprend, fixé sur la table correspondante, un rail de guidage 30 d'un bloc d'accompagnement 31 comprenant sur sa face avant une tête de verrouillage à ressort 32 des extrémités des broches destinées à y être engagées. Cette tête comporte ici, comme on peut le voir à la figure 5, deux logements de réception 33 de l'extrémité correspondante de broche à gorge de retenue 23, avec laquelle coopère un doigt radial de verrouillage 34 soumis à un ressort 35 le sollicitant normalement en position de verrouillage. Le doigt 34 peut être effacé par effet de rampe, sous l'action de la face tronconique 36 d'extrémité de broche indiquée figure 4 (pour l'engagement du verrouillage) aussi bien que sous l'action du flanc adjacent oblique de la gorge 23 (au déverrouillage s'effectuant par extraction de la broche).

Le bloc d'accompagnement 31 est lié à la tige de piston 31a d'un vérin à fluide sous pression dont le cylindre 31b est fixé en bout du rail 30.

Dans le cas d'orientation asymétrique de la forme des trous dans la plaque à usiner, il sera prévu une tête de verrouillage pour broche, montée à rotation, ceci afin de retrouver à chaque passe l'orientation correspondant à chaque face de la plaque. Cette rotation des têtes peut être obtenue à l'aide d'une douille montée en engagement hélicoîdal avec le bloc et venant en butée en fin de course de recul du mouvement d'accompagnement pour prendre l'orientation angulaire de réception des broches provenant du bloc de traction adjacent, la rotation inverse de cette douille étant assurée par un ressort de rappel en une position angulaire de butée prédéterminée dès le début d'advance du bloc d'accompagnement, pour donner l'orientation de broche désirée pour la passe suivante. De plus, pour faciliter l'extraction manuelle des broches, le serrage des doigts de verrouillage peut être annulé par l'intermédiaire d'un levier coopérant avec eux.

Le châssis 16 de l'un des dispositifs de traction 14 est monté fixe sur la table 13 correspondante, tandis que l'autre est monté coulissant sur sa table, par l'intermédiaire de glissières 37 lui permettant une certaine course parallèle à la course de traction, deux vérins 38 étant interposés entre ce châssis coulissant et la table de façon à pouvoir manoeuvrer la plaque avant 16a du châssis 16 correspondant, entre une position d'ouverture par rapport à la plaque avant de l'autre châssis fixe permettant un engagement et une manoeuvre aisés entre eux de la plaque 4 à brocher, et une position de serrage de la plaque 4 entre les deux plaques avant desdits châssis pour l'opération de brochage.

Le positionnement exact de la plaque 4 pour l'opération de brochage peut alors être assuré par l'intermédiaire de pieds de centrage à pointe conique 39 portés par la plaque avant du châssis coulissant 16 et destinés à s'engager dans des trous de la plaque 4 avoisinant ceux qui vont être brochés. De tels pieds de centrage peuvent aussi être prévus rétractables et à commande par fluide sous pression, aussi bien sur le châssis fixed que le châssis coulissant 16. Ils peuvent servir à contrôler la présence plaque ou trous. Plusieurs pieds sont nécessaires et c'est la combinaison de leurs positions qui permet le positionnement précis de la plaque dans tous les cas d'espèce.

Il va de soi que les plaques avant 16a des châssis 16 comportent des trous permettant leur traversée par les deux groupes de broches.

Sur chaque table 13 est implanté un dispositif de manutention destiné à transférer, en fin de passe, le groupe de broches que porte le dispositif de traction 14 au dispositif d'accompagnement adjacent 15. Ainsi qu'on le voit notamment aux figures 3 à 5, chaque dispositif de manutention comprend un socle de fixation 40 sur la table 13, ce socle portant un axe vertical fixe 41 autour duquel peut pivoter un bras 42 formant potence de suspension d'une pince de manutention du groupe de broches, désigné par 43 dans son ensemble. L'axe 41 est cannelé en 41a et porte coulissant à cannelures sur lui un pignon 44 logé dans le moyeu du bras 42 et avec lequel est en prise une crémaillère 45 montée coulissante dans le bras et liée à la tige de piston 46 d'un vérin à fluide sous pression, dont le cylindre 47 est fixé en bout d'un support tubulaire solidaire du bras 42. Le moyeu du bras 42 est surmonté d'une colonne 48 solidaire de lui et entourant l'axe 41 qu'elle dépasse en hauteur et à la partie supérieure de laquelle est fixé le cylindre 49 d'un vérin à fluide sous pression, dont la tige de piston 50 est liée à un axe intermédiaire 51 monté dans une cuvette d'appui 52 rapportée au sommet de l'axe 41.

On comprendra qu'ainsi le vérin 46—47 constitue le moteur de pivotement du bras 42 (le pignon 44 restant fixe en rotation) tandis que le vérin 49—50 constitue le moteur de soulèvement et descente du bras 42 et donc de la pince 43. Dans sa position de descente qui est celle représentée à la figure 5 le bras 42 est positionné angulairement avec précision, par engagement d'un cavalier de centrage 53 (il en porte deux opposés à 180°) sur un cran de blocage en rotation 54 fixé sur le socle 40.

La pince de manutention 43 comprend un support 55 fixé sous le bras 42 et portant, monté soulissant sur lui par engagement à queue d'aronde, un corps de pince 56. Ce dernier est pourvu d'une plaque d'extrémité 57 liée à la tige de piston 58 d'un vérin à fluide sous pression dont le cylindre 59 est fixé sur le support 55, de sorte que ce vérin permet un déplacement en translation du corps de pince 56 parallèlement à l'axe des broches. Le corps de pince porte, montées tournantes entre la plaque d'extrémité 57 et une autre plaque d'extrémité 60, quatre tiges parallèles 61 en bout desquelles sont montées clavetées des mâchoires de pince 62 associées deux à deux pour pouvoir saisir chacune des deux broches de l'un ou l'autre groupe B1—B2.

Ces mâchoires sont sollicitées par paire en position de fermeture par un ressort de compression 63 interposé entre leurs branches prolongées au-delà de leur tige d'articulation respective 61. Elles peuvent être actionnées à l'ouverture par l'intermédiaire d'un vérin à fluide sous pression dont le cylindre 64 est fixé sur le corps de pince 56 et dont la tige de piston 65 porte une came 66 coopérant avec deux leviers de manoeuvre 67 des branches adjacentes de chaque paire de mâchoires, clavetés sur les deux tiges centrales d'articulation 61 de celles-ci. Ces mâchoires de pince peuvent être prévues par ailleurs de façona à garder l'orientation angulaire des broches autour de leur axe, s'il y a lieu, par un engagement de forme correspondant entre mâchoires et broches.

Le fonctionnement d'une telle brocheuse est ci-après décrit en supposant la plaque à brocher 4 déjà positionnée, comme cela a été précédemment indiqué, pour un cycle de brochage.

Le cycle de brochage part d'un état initial selon lequel les deux groupes de broches B1 et B2 sont respectivement maintenus dans les têtes de verrouillage à ressort 32 des blocs d'accompagnement 31, comme l'illustre notamment la figure 1.

Par alimentation simultanée des deux cylindres 31b, les blocs d'accompagnement 31 font avancer les extrémités libres des groupes de broches B1 et B2 au travers des trous à brocher de la plaque 4 jusqu'à les engager dans les têtes de verrouillage 21 des blocs de traction 19 correspondants, qui sont en appui de butée contre des arrêtoirs 16b solidaires des plaques avant des châssis 16, tandis que les tiges 29e en butée contre ces dernières autorisent par recul des poussoirs 25 les broches à pénétrer librement dans les logements de réception 22 des têtes 21 des blocs de traction. A partir de cet état de course des dispositifs d'accompagnement, les vérins 17 des deux dispositifs de traction 14 sont alimentés pour tirer les deux groupes de broches B1 et B2 avec l'effort nécessaire au travers des trous à brocher, après que leur course initiale provoque d'abord la libération des poussoirs 25 qui, sous l'action de leur ressort 26, passent en position de mise en état de verrouillage des doigts 24 dans les gorges de retenue 23 des broches, les dispositifs d'accompagnement continuant encore à maintenir et accompagner les broches à leur autre extrémité. Cette phase de brochage est illustrée à la figure 6 où les blocs de traction 19 tirent les broches suivant les flèches indiquées et où les dispositifs de manutention des broches, dont la pince de manutention 43 est initialement en position haute au-dessus des broches, effectuent pendant le brochage un pivotement de 180 indiqué par les flèches 68 (sous l'action du vérin 46—47) et une translation indiquée par les flèches 69 (sous l'action du vérin 58—59).

La figure 7 illustre la position des différents dispositifs en fin de course de brochage, les blocs de traction 19 ayant conservé les broches dans leurs têtes de verrouillage 21 et les blocs d'accompagnement 31 les ayant abandonnées en fin de course par désengagement forcé (sous l'effort de traction) des doigts à ressort 34 des têtes de verrouillage 32, ces blocs 31 étant renvoyés en position initiale suivant les flèches 70. Les dispositifs de manutention des broches ont achevé leur mouvement indiqué par les flèches 68—69 de la figure 6 et chaque pince de manutention 43 est alors descendue (sous l'action du vérin 49—50) en position de préhension des broches, s'effectuant par ouverture forcée, à l'encontre des ressorts 63, des mâchoires des pinces 62 dont les extrémités présentent à cet effet des becs divergents d'engagement des broches. Cette descente de chaque pince de préhension des broches est schématisée par la flèche 71.

On notera en outre qu'en fin de course de recul des blocs de traction 19, la tige de butée arrière 29f de chaque bloc vient recontrer sa plaque de butée 29g ce qui provoque le recul des poussoirs 25 et le déverrouillage des extrémités de broches restant seulement supportées dans les têtes de verrouillage 21.

La figure 8 illustre la phase suivante de manutention qui est l'extraction des broches hors des blocs de traction 19, assurée par la translation de chaque pince de manutention 43, sous l'action du verin 58—59 (flèche 72).

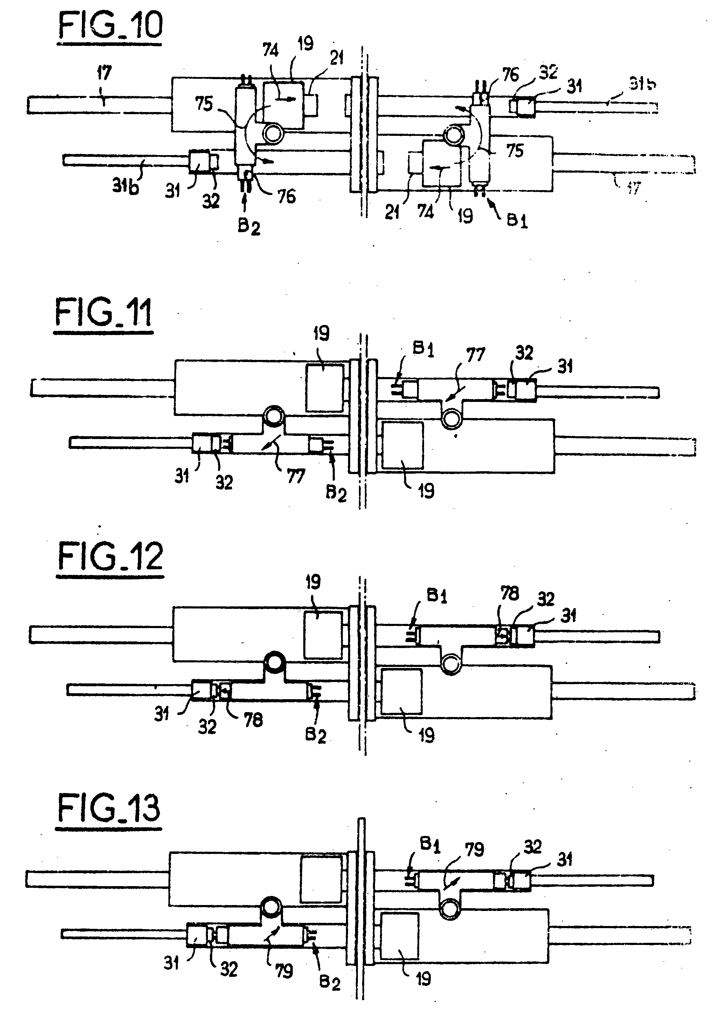

La figure 9 illustre la phase suivante qui est la remontée de chaque pince de manutention 43 portant son groupe de broches (action du vérin 49—50 indiquée par la flèche 73). Cette remontée précède la phase suivante illustrée à la figure 10, selon laquelle:

—les blocs de traction 19 sont renvoyés en position avant de butée contre les arrêtoirs des plaques avant 16a sous l'action de leur vérin respectif 17 (flèche 74),

—chaque dispositif de manutention effectue un pivotement de 180° indiqué par la flèche 75 (sous l'action du vérin 46—47) tandis que la pince de manutention 43 est soumise à une translation indiquée par la flèche 76 (sous l'action du vérin 58—59), de sorte que l'ensemble parvient à l'état illustré par la figure 11, avec lequel s'enchaîne la descente des dispositifs de manutention indiquée par les flèches 77 (sous l'action des vérins 49—50) amenant les broches en face des têtes de verrouillage de chaque bloc d'accompagnement 31 adjacent au bloc de traction 19 venant de les tirer au travers de la plaque à brocher 4, étant à voir que la rotation de manutention de 180° des broches a ici pour effet de les replacer dans leur sens normal de travail, c'est-à-dire avec leur extrémité destinée à être tirée face au bloc de traction auquel elles vont être transmises.

La figure 12 illustre la phase finale du transfert des broches aux blocs d'accompagnement 31 qui s'effectue par translation de chaque pince de manutention 43 suivant la flèche 78 (sous l'action du vérin 58—59) de sorte que les broches se retrouvent verrouillées dans les têtes de verrouillage à ressort 34 de chaque bloc 31, cette phase de transfert se terminant comme illustré par la figure 13 par la remontée des dispositifs de manutention indiquée par les flèches 79 (sous l'action des vérins 49—50). Cet état final correspond aux conditions initiales précédemment définies de début d'un cycle de brochage, étant à voir que cette manutention des broches s'effectue en même temps que le repositionnement de la plaque à brocher 4 en fin de chaque passe, qui se trouve limité au simple déplacement destiné à amener en face des broches la série de trous suivante à brocher, tandis que la brocheuse peut ainsi effectuer des passes travaillantes successives de sens inverse avec les deux groupes de broches utilisés, ce dont il résulte une capacité de production qu'appréciera l'homme de l'art.

Bien entendu, de nombreuses variantes peuvent être imaginées, notamment au niveau du dispositif de manutention, sans pour autant sortir du domaine de l'invention.

**Revendications**

1. Brocheuse à broches multiples, destinée au brochage d'un réseau de trous ménagés dans des pièces, comprenant des moyens de déplacement et de positionnement des pièces sur la brocheuse, des moyens de traction et des moyens d'accompagnement des broches coopérant respectivement avec les extrémités opposées de celles-ci pour assurer leur passage au travers des trous des pièces à brocher d'un côté à l'autre de celles-ci, caractérisée en ce que les moyens de traction et les moyens d'accompagnement sont prévus pour deux groupes semblables de broches destinés à travailler simultanément en sens inverse, et qu'il leur est associé de chaque côté du plan de positionnement des pièces, un dispositif de manutention destiné à transférer en le retournant chaque groupe des broches des moyens de traction aux moyens d'accompagnement voisins en fin de passe, de sorte que les broches de chaque groupe opèrent par passes travaillantes successives de sens inverse, dans l'intervalle desquelles il suffit de repositionner les pièces selon les brochages désirés.

2. Brocheuses à broches multiples selon la revendication 1, dans laquelle les moyens de traction comprennent des têtes de verrouillage à libération du verrouillage par poussoirs à ressort commendés en une position de butée avant des moyens de traction, caractérisée en ce qu'elle comporte également des moyens de commande desdits poussoirs à ressort dans la position de butée arrière desdits moyens de traction.

3. Brocheuse à broches multiples selon l'une des revendications précédentes, caractérisée en ce que chaque dispositif de manutention des broches est monté pivotant à 180° autour d'un axe intermédiaire entre les deux groupes de broches et comprend une pince de préhension des broches du groupe considéré, effaçable par rapport aux broches en position de brochage et capable d'un mouvement de translation dans l'axe de celles-ci pour pouvoir les désengager des moyens de traction et les engager dans les moyens d'accompagnement lors de leur transfert.

4. Brocheuse à broches multiples selon l'une des revendications précédentes, caractérisée en ce que la pince de préhension comprend des mâchoires ayant un engagement de forme avec les broches destiné à leur conserver leur orientation angulaire autour de leur axe lors de leur transfert.

5. Brocheuse à broches multiples selon la revendication 4, pour brochages d'orientation angulaire différente selon le sens des passes de travail des broches, dans laquelle les moyens d'accompagnement comportent des têtes de verrouillage à ressort des extrémités des broches, caractérisée en ce que lesdites têtes comportent une liaison à engagement hélicoïdal avec lesdits moyens d'accompagnement et coopèrent avec une butée en fin de recul du mouvement d'accompagnement pour prendre l'orientation angulaire de réception des broches provenant des moyens de traction adjacents, ces têtes étant soumises à des moyens de rappel en une position angulaire de butée prédéterminée correspondant à l'orientation de broche désirée pour la passe suivante.

6. Brocheuse à broches multiples selon l'une des revendications précédentes caractérisée par la disposition horizontale des moyens de traction et d'accompagnement précités et par le fait que la plaque à brocher est supportée par un portique pourvu de moyens de déplacement et de centrage de la plaque en hauteur et monté déplaçable sur un châssis de roulement inférieur transversal à l'axe des broches.

7. Brocheuse à broches multiples selon l'une des revendications précédentes, caractérisée en ce que les moyens de traction de l'un des groupes de broches sont supportés par un châssis mobile parallèlement à l'axe des broches et soumis à des moyens de commande permettant de serrer avec un châssis fixe de l'autre groupe de broches la plaque à brocher en position de brochage, et de la desserrer pour son changement de position, l'un desdits châssis portant des moyens de positionnement de la plaque coopérant avec les trous à brocher de celle-ci.

## Claims

1. Multiple broach broaching machine for broaching a pattern of holes formed in a workpiece, this machine comprising:
   means for moving and positioning the workpieces on the broaching machine;
   means for pulling the broaches and means for following the broaches, said pull means and follower means co-acting with the opposite ends of the broaches, respectively, to ensure their passage through the holes of the workpieces to be broached from one side to the other side of the workpieces, said pull means and follower means being provided for two similar sets of broaches adapted to operate simultaneously in opposite directions;
   a handling device associated with said sets of broaches on either side of the plane in which the workpieces are positioned, for the purpose of transferring each set of broaches, by turning same over, from said pull means to the adjacent follower means at the end of each pass;
   whereby the broaches of each set operate by making successive working passes in opposite directions, the workpieces being simply repositioned in the gap between said passes according to the desired broaching action.

2. Multiple broach broaching machine according to claim 1, wherein the pull means comprise locking heads adapted to release the broaches through spring-loaded push members when said pull means are in their front abutting position, this machine further comprising means for controlling said spring-loaded push members in the back abutting position of said pull means.

3. Multiple-broach broaching machine according to any of the preceding claims, wherein each broach handling device is rotated through 180 degrees about an axis disposed between the two sets of broaches and comprises a clamp for gripping the broaches of the set concerned, said clamp being retractable with respect to the broaches in the broaching position and adapted to be translated towards the axis of the broaches for releasing same from said pull means and engaging said broaches into the follower means during their transfer.

4. Multiple-broach broaching machine according to any of the preceding claims, wherein the gripping clamp comprises jaws having an operative, broach-engaging portion matching the external configuration of the broaches for the purpose of preserving their angular orientation about their axis during their transfer.

5. Multiple-broach broaching machine according to claim 4 for performing broaching operations of different angular orientations as a function of the direction of the working passes of the broaches, wherein said follower means comprise locking heads incorporating spring-loaded pins adapted to engage the ends of said broaches, said heads being operative connected by screw means to said follower means and co-acting with stop means at the end of the backward stroke for assuming the proper angular orientation for receiving the broaches from the adjacent pull means, said heads being responsive to return means urging them to a predetermined abutment angular position corresponding to the desired broach orientation for performing the next pass.

6. Multiple-broach broaching machine according to any of the preceding claims, wherein said pull and follower means are horizontally arranged, the plate to be broached being supported by a gantry provided with means for moving and centering the plate vertically, the gantry itself being movable on a lower rolling frame disposed across the broach axis.

7. Multiple-broach broaching machine according to any of the preceding claims, wherein the pull means of one of the sets of broaches are supported by a frame movable parallel to the broach axis and responsive to control means for clamping, by means of a fixed frame of the other set of broaches, the plate to be broached in the broaching position, and releasing said broach for changing its position, one of said frames comprising means for positioning said plate which are adapted to co-act with the holes to be broached therein.

**Patentansprüche**

1. Mehrnadel-Räummaschine zur Räumung eines in den Werkstücken vorhandenen Öffnungsnetzes, das Verstell - und Einstellvorrichtungen der Werkstücke auf der Räummaschine aufweist sowie Hub - und Begleitvorrichtungen der Nadeln, die jeweils mit den entgegengestzten Enden dieser betrieben werden um den völligen Durchgang der Öffnungen der zu räumenden Teile zu gewährleisten; diese Anlage zeichnet sich dadurch aus, daß die Hub - und Begleitvorrichtungen für zwei ähnliche Nadelgruppen zur gleichzeitigen Bearbeitung in entgegengesetzter Richtung vorgesehen sind und daß an jeder Seite der Werkstück-Einstellebene eine Fördervorrichtung angebracht ist zur Überführung - bei gleichzeitiger Wendung - jeder Nadelgruppe der Hubvorrichtung hin zu den benachbarten Begleitvorrichtungen am Durchgangsende; auf diese Art und Weise arbeiten die Nadeln jeder Gruppe in entgegengesetzter Richtung in aufeinanderfolgenden Durchgänge, in deren Zwischenzeit die Werkstücke nur entsprechend der gewünschten Räumung in Stellung gebracht werden müßen.

2. Mehrnadel-Räummaschine entsprechend Anspruch 1, bei der die Hubvorrichtungen Verriegelungsköpfe mit Verriegelungslösung durch Federstößel, die in der vorderen Anschlagstellung der Hubvorrichtungen gesteuert werden, aufweisen; sie zeichnet sich dadurch aus, daß sie ebenfalls mit Steuervorrichtungen der erwähnten Federstößel in der hinteren Anschlagstellung der genannten Hubvorrichtungen ausgestattet ist.

3. Mehrnadel-Räummaschine entsprechend eines vorher genannten Anspruches dadurch ausgezeichnet, daß jede Nadel-Förderanlage 180° schwenkbar um eine Zwischenachse zwischen den zwei Nadelgruppen montiert ist und daß sie eine Greifzange für die Nadeln der in Frage kommenden Gruppe aufweist, die im Verhältnis zu den sich in der Räumstellung befindlichen Nadeln entfernbar ist und die in der Achse der Letzteren einer Translations-Bewegung fähig ist zur Lösung aus den Hubvorrichtungen und zur Eingabe in die Begleitvorrichtungen bei der Überführung.

4. Mehrnadel-Räummaschine entsprechend eines vorher genannten Anspruches dadurch ausgezeichnet, daß die Greifzange Backen hat zur Formeinspannung mit den Nadeln zur Beibehaltung der Winkelorientierung um ihre Achse bei der Überführung.

5. Mehrnadel-Räummaschine entsprechend Anspruch 4, zur Räuming mit verschiedener Winkel-Orientierung je nach Richtung der Nadelarbeits-Durchgänge, bei der die Begleitvorrichtungen Verriegelungsköpfe mit Federn an den Nadel-Endteilen aufweisen, ausgezeichnet durch die Tatsache, daß die genannten Köpfe eine Verbindung mit Spiraleneinspannung mit den genannten Begleitvorrichtungen haben und im Einklang mit einem Anschlag am Ende des Rücklaufes der Begleitbewegung arbeiten zur Einnahme der Winkelorientierung der Nadelaufnahme-ausgehend von den angrenzenden Hubvorrichtungen-, wobei diese Köpfe Rückholvorrichtungen unterworfen sind, die sie in die vorbestimmte Anschlag-Winkelstellung bringen, eine Stellung, die der für den nächsten Durchgang gewünschten Nadelorientierung entspricht.

6. Mehrnadel-Räummaschine entsprechend eines vorher genannten Anspruches ausgezeichnet durch die waagrechte Anordnung der Hubvorrichtungen und der Begleitvorrichtungen, die zuvor erwähnt wurden und durch die Tatsache, daß die Räumplatte durch eine Brücke mit Höhenbeweg- und Zentriervorrichtungen getragen wird und daß sie so montiert ist, daß sie auf einem unteren, zu der Nadelachse transversalen Laufrahmen bewegbar ist.

7. Mehrnadel-Räummaschine entsprechend eines vorher genannten Anspruches ausgezeichnet durch die Tatsache, daß die Hubvorrichtungen von einer Nadelgruppe durch einen beweglichen Rahmen getragen werden, paralell zu der Nadelachse und Steuervorrichtungen unterworfen sind, die das Anziehen mit einem festen Rahmen der anderen Nadelgruppe der Räumplatte in Räumstellung gestattet, wobei einer der Rahmen die Vorrichtungen für die In-Stellung-Bringung der Platte, die mit den zu räumenden Öffnungen dieser in Einkland steht, trägt.

0 001 938

FIG.1

FIG.2

0 001 938

FIG_3

FIG_4

FIG_15

FIG_5

FIG_14

2

FIG_6

FIG_7

FIG_8

FIG_9

# FIG_10

# FIG_11

# FIG_12

# FIG_13